# FASCICULE DE BREVET EUROPEEN

(11) **EP 3 142 841 B1**
(45) Date de publication et mention de la délivrance du brevet: **01.05.2019**
(21) Numéro de dépôt: 15725836.9
(22) Date de dépôt: 07.05.2015
(51) Int. Cl.: B29B 15/12, C08J 5/04, B29K 77/00

(54) **UTILISATION D'UNE DISPERSION AQUEUSE FINE DE POLYMERE POUR L'IMPREGNATION DE FIBRES NATURELLES**
VERWENDUNG EINER FEINEN WÄSSRIGEN POLYMERDISPERSION ZUR IMPRÄGNIERUNG VON NATURFASERN
USE OF A FINE AQUEOUS POLYMER DISPERSION FOR THE IMPREGNATION OF NATURAL FIBRES

(30) Priorité: 12.05.2014 FR 1454213
(43) Date de publication de la demande: 22.03.2017
(73) Titulaire: Arkema France, 92700 Colombes (FR)
(72) Inventeur: PINEAU, Quentin, 27000 Evreux (FR); HOCHSTETTER, Gilles, 94240 L'Hay Les Roses (FR); AUDENAERT, Marc, 27300 Bernay (FR)
(86) Numéro de dépôt international: PCT/FR2015/051220
(87) Numéro de publication internationale: WO 2015/173498

(56) Documents cités:
- WO-A1-2013/178955
- FR-A1- 2 973 802
- US-A1- 2002 176 979
- K. CHARLET ET AL: "Characteristics of Hermés flax fibres as a function of their location in the stem and properties of the derived unidirectional composites", COMPOSITES: PART A, vol. 38, 2007, pages 1912-1921, XP002728983,

## Description

La présente invention concerne l'utilisation d'une dispersion aqueuse spécifique dans le traitement par imprégnation de mèches ou de rubans de fibres naturelles d'origine végétale et en particulier de fibres de lin, plus particulièrement pour la consolidation desdites mèches de fibres leur permettant d'avoir une tenue mécanique améliorée lors de leur mise en oeuvre ou de leur utilisation pour faire des renforts unidirectionnels, des non tissés ou des tissus, qui seront ensuite imprégnés par une résine pour faire des matériaux composites, sans besoin de torsadage des fils (sans fils torsadés).

Les fibres naturelles comme les fibres de lin, de chanvre ou de sisal et en particulier de lin, ne sont pas des fibres continues mais discontinues liées entre elles par des fibrilles transversales (pectines). Ce fait crée un besoin de rechercher un moyen de renforcer la résistance mécanique des mèches ou des fils ou des rubans de fibres naturelles, contrairement au cas des fibres de verre ou de carbone qui sont continues. Pour les fibres pour textile, on procède en torsadant les fibres naturelles de façon à constituer un fil présentant une résistance mécanique suffisante pour l'utilisation visée. Le défi est d'obtenir cette tenue mécanique améliorée de la mèche de fibres, sans torsader les fibres. Lorsque l'on cherche à faire un renfort naturel pourfabriquer des composites, on cherche à préserver au maximum les qualités intrinsèques des fibres naturelles, notamment des fibres de lin et pour cette raison on ne torsade pas les fibres : les mèches de fibres, c'est-à-dire des faisceaux de fibres ou rubans de fibres naturelles sont alors constituées de fibres à usage technique présentant des meilleures propriétés mécaniques que les fibres à usage textile car elles n'ont pas été endommagées par l'étape de torsion utilisée pour fabriquer les fibres à usage textile. En conséquence, l'obtention d'une mèche ou d'un ruban de fibres naturelles techniques suffisamment résistantes pour ne pas se rompre pendant les opérations de fabrication de ces mèches ou des rubans, nécessite la réalisation des mèches ou des rubans de fibres de forts grammage exprimé en tex, nettement plus importants que ce qui se fait avec les fibres de verre ou de carbone. Un tex correspond à un grammage ou masse linéaire (par unité de longueur) égale à 1 g/km ou 10⁻⁶ kg/m. Ce grammage plus important conduit à des renforts fibreux unidirectionnels ou des non tissés ou des tissus plus grossiers, comportant des imperfections et affectant ainsi la résistance mécanique finale des composites à fibres naturelles telles que les fibres de lin. Il est également impossible avec ce type de renfort à base de fibres naturelles de réaliser des panneaux sandwich légers comportant des peaux en composite à fibres naturelles, en particulier à fibres de lin, de très faible épaisseur. Ainsi, la finalité d'un ruban ou d'une mèche de plus faible grammage en fibres de lin est de réaliser des composites à fibres naturelles quasi continues de plus grande résistance mécanique et de réaliser des panneaux sandwich légers comportant des renforts composites à base de fibres naturelles techniques, plus performants que ceux réalisés à partir de fibres textiles. Par conséquent, il y a un besoin de consolidation et de renforcement desdites mèches de fibres sans recourir à un torsadage des fibres et en cherchant un liant capable de pénétrer au coeur des mèches desdites fibres pour lier les fibres les unes aux autres avec une cohésion suffisante pour améliorer la tenue mécanique de la mèche.

Les composites thermoplastiques ont déjà, par leur matrice, l'avantage sur les composites à matrice thermodure d'être recyclables et de mise en oeuvre ou en forme facile. Le renfort par des fibres naturelles rajoute un avantage supplémentaire à la recyclabilité qui est l'origine végétale des fibres : c'est un élément important à considérer dans le contexte écologique où l'on vise l'utilisation de matières premières renouvelables respectant l'environnement. D'autre part, par rapport aux composites thermoplastiques avec renfort de fibres de verre, les composites thermoplastiques à renfort fibreux d'origine naturelle, en particulier à base de fibres de lin, permettent d'alléger lesdits composites pour une performance équivalente. En effet, la densité des fibres de lin (1,5) est d'environ 40% plus faible que celle des fibres de verre, d'où l'intérêt et besoin croissant d'avoir des mèches ou des rubans de fibres naturelles en particulier de lin, avec une consolidation entre les fibres du faisceau et une tenue mécanique améliorée sans torsadage.

La demande GB 512558 décrit le traitement de fibres de coton par une dispersion de caoutchouc ou de résine de synthèse à faible taux de polymère allant de 2 à 10%, sans besoin de torsader les fils de coton pour une tenue mécanique en traction. Après imprégnation sous pression, le surplus de dispersion est éliminé par jet d'air pressurisé, avec peu de particules de polymère restant sur les fibres après élimination du surplus et séchage des fibres. Aucune donnée sur le taux de polymère restant entre les fibres n'est précisée et aucun exemple précis n'est cité sur les conditions d'obtention et sur les résultats précis obtenus. Encore moins, ce document ne décrit le problème spécifique des fibres naturelles comme celles de lin, comme exposé ci-haut pour les besoins de renforcement de matrices thermoplastiques de matériaux composites thermoplastiques, ni ne suggère une solution spécifique audit problème.

D'autre part, la demande EP 0324680 décrit un procédé de préparation d'un semi-produit thermoplastique renforcé, comme un matériau à base de polypropylène renforcé de fibres de verre. Selon ce document, le mouillage des fibres de renforcement est d'autant meilleur que les fibres restent à l'état unitaire et non pas à l'état de mèches ou de fils de base. Plus particulièrement, le procédé décrit comprend les étapes d'abord de préparation d'une composition aqueuse d'enduction comprenant une résine à l'état parcellaire et un agent régulateur de viscosité et en option des additifs, ensuite d'enduction d'une face d'un mat de fibres de renforcement dispersées à l'état unitaire avec la composition aqueuse d'enduction suivie d'un séchage pour obtenir un semi-produit en feuille et ensuite en option éventuellement la fusion de ladite résine. Aucun problème technique lié aux fibres naturelles comme celles de lin n'est mentionné, ni une solution à ce problème n'est suggéré dans ce document qui concerne plus celui d'un semi-produit à base d'une polyoléfine renforcé avec des fibres de verre.

FR 2223173 décrit également un procédé de préparation de feuilles ou de rubans de fibres imprégnés de résine à partir d'une dispersion aqueuse de résine, en particulier thermodurcissable, avec dispersion après épaississement à l'aide d'un agent épaississant. A nouveau, les fibres concernées ne sont pas des fibres naturelles comme celles de lin, ni le problème exposé, ni sa solution ne sont suggérés. Un procédé similaire est décrit par EP 0013244.

La demande WO 03/091006 décrit un procédé de fabrication d'un matériau composé de fibres naturelles pré imprégnées de résine organique et se présentant sous forme de fil ou de ruban solide et souple. Les fibres naturelles incluent les fibres de lin, de chanvre ou de sisal ou de toute autre plante fibreuse.

FR 2 973 802 décrit l'utilisation d'une dispersion aqueuse de polymère comprenant un polymère du chlorure de vinyle comme liant d'imprégnation de mèches ou de rubans de fibres naturelles.

US 2002/176979 divulgue un procédé pour la fabrication d'un matériau composite obtenu par imprégnation de filaments de fibres naturelles avec une émulsion contenant des particules de polymère.

WO 2013/178955 décrit un procédé de fabrication d'un matériau composite, comportant un assemblage de fibres naturelles imprégné d'un polymère thermoplastique amorphe ou semi- cristallin.

La présente invention permet de résoudre le problème technique exposé ci-haut par rapport à l'état de la technique avec un procédé spécifique d'imprégnation de mèches ou de rubans de fibres naturelles où ce problème se pose, cette imprégnation ayant lieu à coeur par une dispersion aqueuse de polymère spécifique permettant ainsi audit polymère de lier au coeur du faisceau de fibres, entre elles, les fibres desdites mèches ou desdits rubans et de les consolider par cette imprégnation spécifique avec les fines particules de polymère utilisées après fusion. Cette imprégnation peut conduire plus loin et directement à un renfort fibreux préimprégné, mèche ou ruban de faible grammage utilisable pour la fabrication de matériaux composites.

La flexibilité de la solution de la présente invention lui permet d'être intégrée dans une ligne continue de fabrication dudit renfort fibreux à base de fibres naturelles comme les fibres de lin, allant du traitement des fibres naturelles issues des champs, à la fabrication d'une mèche ou d'un ruban pré imprégné et calibré.

La présente invention couvre donc l'utilisation de ladite dispersion aqueuse spécifique de polymère comprenant au moins un polymère choisi parmi les copolyamides amorphe présentant une Tg allant de 50°C à 175°C, de préférence de 80°C à 150°C ou semi-cristallin ayant une température de fusion allant de 70°C à moins de 220°C, de préférence supérieure à 90°C et jusqu'à 190°C, plus préférentiellement de 100°C à 170°C, comme liant d'imprégnation de mèches ou de rubans de fibres naturelles, en particulier de mèches ou de rubans de fibres de lin dans laquelle utilisation, ledit polymère :
- est incorporé au coeur du faisceau de fibres constituant ladite mèche ou ledit ruban et liant ainsi lesdites fibres entre elles,
- est présent dans ladite dispersion à un taux en poids allant de 5% à 50% avec des particules en dispersion ayant une taille moyenne en nombre inférieure à 10000 nm, de préférence allant de 100 nm à 5000 nm et plus préférentiellement de 50 à 500 nm, et,
ledit polymère est dispersible ou dispersé sous forme de poudre en milieu aqueux sans tensioactif et de préférence ledit polymère à l'état de poudre porte des groupements ioniques ou des groupements précurseurs de groupements ioniques, en particulier par neutralisation dans l'eau lors de la préparation de ladite dispersion,
ledit polymère est un copolyamide, de préférence porteur de groupements terminaux carboxy, sulfoniques ou des groupements terminaux aminés, plus préférentiellement ayant un taux desdits groupements allant de 50 à 500 µeq/g, en particulier de 100 à 250 µeq/g.

La dispersion de polymère selon l'invention est une dispersion fine des particules de polymère par la limitation de la taille desdites particules de sorte que lesdites particules diffusent facilement au coeur du faisceau (de la mèche) des fibres naturelles pour consolider (lier entres elles) lesdites fibres.

Ladite dispersion comprend dans sa signification selon l'invention, à la fois une dispersion de polymère dispersé à l'aide d'un dispersant ou émulsifiant ou tensioactif après sa polymérisation par quelque technique que ce soit, qu'on appellera aussi « post-émulsion » ou l'auto dispersion sans dispersant, émulsifiant ou tensioactif par la présence de fonctions ioniques ou précurseurs de fonctions ioniques, par exemple fonctions acides carboxyliques neutralisées sous forme de sel ou le terme dispersion aqueuse de polymère englobe également une émulsion de polymère ou « latex de polymère » obtenu par la technique bien connue à l'homme du métier comme les techniques précédentes de polymérisation radicalaire en émulsion dans l'eau à partir d'une composition de monomères en émulsion à l'aide d'au moins un tensioactif.

Les polymères de ladite dispersion selon l'invention peuvent être des homopolymères ou des copolymères à base d'au moins deux monomères ou motifs répétitifs ou ils peuvent être des mélanges de polymères compatibles entre eux. « Polymères compatibles » signifie miscibles entre eux, sans séparation de phase.

Selon une option, ledit copolyamide porte des groupements aminés, de préférence amines primaires, neutralisés sous forme d'ammonium par un acide, de préférence un acide de Bronsted, plus préférentiellement phosphoré.

Selon une autre option, ledit copolyamide porte des groupements carboxy neutralisés, sous forme de sel, par une base.

Selon une option particulière, le copolyamide est semi-cristallin et a une température de fusion inférieure ou égale à 150°C.

Ledit copolyamide peut comprendre au moins un des motifs suivants : 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 et leurs mélanges et de préférence comprend au moins un motif choisi parmi 11, 12, 10.10, 6, 6.10, 6.12, 10.12, 6.14, 6.6/6, 11/10.10 et leurs mélanges.

Selon une autre possibilité, ledit copolyamide peut être choisi parmi : PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.I, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 et leurs mélanges. IPD est l'isophorone diamine et Pip la pipérazine.

Selon une autre possibilité, ledit copolyamide peut être amorphe semi-aromatique et choisi parmi :
- 6.I, 8.I, 9.I, 10.I, 11.I, 12.I, 6.I/9.I, 9.I/10.I, 9.I/11.I, 9.I/12.I, 9/6.I, 10/6.I, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10.10/9.I, 10.12/9.I, 6.10/10.I, 6.12/10.I, 9.10/10.I, 9.12/10.I, 10.10/10.I, 10.12/10.I, 10I/6I 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- polyamides terpolymères précédents avec 12/ remplacé par 9/, 10/, 6.10/, 6.12/, 10.6/, 10.10/, 10.12/, 9.10/ et 9.12/,
- tous les polyamides cités ci-haut, avec l'isophtalique (I) remplacé partiellement jusqu'à 40% mol par le téréphtalique (T) le naphtalène 2,6 dicarboxylique et/ou par le 1,3- ou le 1,4- CHDA (acide cyclohexane dicarboxylique), avec tout ou partie des diamines aliphatiques linéaires pouvant être remplacées par des diamines aliphatiques ramifiées, de préférence parmi triméthyl hexaméthylène diamine TMD, méthyl pentaméthylene diamine MPMD, méthyloctaméthylène diamine (MOMD) ou par des diamines cycloaliphatiques, de préférence parmi BMACM, BACM et/ou IPD ou des diamines arylaliphatiques, de préférence m- ou p-xylylène diamines,
- tous les polyamides cités ci-haut où l'isophtalique (I) est remplacé partiellement ou totalement par un diacide aliphatique linéaire ou ramifié en C₆ à C₁₈ et en même temps avec remplacement total ou partiel de la diamine aliphatique par une diamine cycloaliphatique parmi BMACM, BACM et/ou IPD.

BMACM est la bis(3-méthyl, amino cyclohexyl) méthane, BACM est la bis(aminocyclohexyl) méthane et IPD (ou aussi notée IPDA) est la isophorone diamine.

Plus particulièrement, ledit polymère est semi-cristallin avec une température de fusion Tf supérieure à 90°C, de préférence d'au moins 100°C et que les particules de ladite dispersion ont une taille moyenne en nombre allant de 50 à 5000 nm et de préférence de 50 à 500 nm. La mesure est faite en utilisant un granulomètre laser.

La température de transition vitreuse Tg des polymères utilisés est mesurée à l'aide d'un calorimètre différentiel à balayage (DSC), après un deuxième passage en chauffe, suivant la norme ISO 11357-2. La vitesse de chauffage et de refroidissement est de 20°C/min. La température de fusion Tf et la température de cristallisation Tc sont mesurées par DSC, après une première chauffe, selon la norme ISO 11357-3. La vitesse de chauffage et de refroidissement sont de 20°C/min.

Concernant le taux en poids sec dudit polymère par rapport au poids sec desdites fibres + polymère, il peut varier de 0,5% à moins de 50%. Ledit taux en poids varie de préférence de 0,5 à 10% quand ladite imprégnation se limite à la consolidation desdites fibres entre elles en plus d'un ensimage. Dans le cas de la consolidation des fibres, leur énergie de cohésion augmente du fait de la liaison desdites fibres entre elles au coeur du faisceau de fibres. Dans le cas d'un ensimage, l'effet recherché est différent et lié à une compatibilisation desdites fibres avec la matrice polymère du composite par l'interface créée autour des fibres avec un polymère spécifique améliorant la compatibilité des fibres avec la matrice pour une meilleure adhésion des fibres à la matrice polymère du matériau composite. Toutefois, il est possible qu'en consolidant les mèches de fibres, grâce à la présente invention, on obtienne également une meilleure compatibilisation des fibres avec la matrice.

Ledit taux peut être supérieur à 25% et inférieur à 50%, de préférence de 30% à 45% quand ladite imprégnation sert à consolider lesdites fibres et en plus à préparer un préimprégné desdites fibres utilisable dans la fabrication de matériaux composites.

La viscosité de ladite dispersion à 23°C peut varier de 10 à 1000 mPa.s. La viscosité est mesurée par la méthode Brookfield (viscosité Brookfield selon ISO 2555).

Selon un cas particulier, ledit polymère est biosourcé et en particulier est un (co)polyamide à base de monomères biosourcés. « (Co)polyamide à base de » signifie ici qu'il comprend au moins un monomère qui est biosourcé.

En particulier, lesdites fibres sont des fibres longues, en particulier des fibres longues de lin avec L/D > 2000.

Lesdites mèches ou rubans sont à base de fibres de lin pouvant avoir un tex (masse linéaire exprimée en tex) allant de 10 à 10000, de préférence de 100 à 4000 et encore plus préférentiellement de 500 à 1500.

Plus particulièrement, lesdites mèches ou rubans de fibres ainsi traitées sont des fibres de renfort, en particulier de lin, de faible densité linéaire pour la fabrication de composites à matrice polymère, en particulier à matrice thermoplastique, plus particulièrement pour matrice thermoplastique polyamide, encore plus particulièrement pour matrice polyamide à base de PA 11, PA10.10, PA 6.10 et PA 10.l/6.l. « Faible densité linéaire » signifie significativement inférieure à celle de la fibre de verre qui est la plus employée pour faire des composites .

Ledit polymère de ladite dispersion aqueuse de traitement peut en particulier être choisi en fonction de ladite matrice dudit matériau composite. Ainsi, ledit polymère peut être identique audit polymère de matrice thermoplastique dudit matériau composite. Il peut être différent dudit polymère de matrice thermoplastique mais dans ce cas il est compatible audit polymère de matrice dudit matériau composite.

La dispersion selon l'invention pour l'imprégnation et plus particulièrement pour la consolidation des fibres naturelles entre elles, en particulier des fibres lin peut être utilisée selon un procédé qui comprend une étape d'imprégnation desdites mèches ou desdits rubans desdites fibres d'imprégnation suivie d'une étape de séchage au moyen d'un système de chauffage, avec au cours dudit séchage l'élimination progressive de l'eau et au fur et à mesure la fusion dudit polymère, l'enrobage desdites mèches ou rubans par ledit polymère fondu incorporé au coeur du faisceau des fibres desdites mèches ou desdits rubans, liant entre elles lesdites fibres, étape de séchage en option suivie par une mise en forme finale desdites mèches ou rubans ainsi traités et finalement une étape de refroidissement desdites mèches ou desdits rubans ainsi traités.

L'étape d'imprégnation peut se faire par immersion (trempage) desdites mèches ou des rubans desdites fibres dans un bain comprenant ladite dispersion ou par pulvérisation sur lesdites mèches ou rubans de ladite dispersion aqueuse de polymère selon l'invention, dans un dispositif de pulvérisation. Ladite dispersion de départ peut également être utilisée diluée dans l'eau avec l'extrait sec ou taux de polymère de la dispersion finale utilisée étant dans la plage définie ci-haut et allant de 5 à 50% en poids. L'immersion et l'imprégnation peuvent être réalisées en continu ou en discontinu avec un temps de séjour variable dans ledit bain d'immersion et d'imprégnation et ajustable en fonction du taux de polymère visé, ce qui signifie que, plus le temps de séjour est court, plus le taux de polymère est faible par rapport auxdites fibres. Un temps de séjour limite peut être défini au bout duquel le taux de polymère imprégné atteint une limite pour une température donnée d'imprégnation qui peut varier de l'ambiante (20°C) jusqu'à 70°C. De manière analogue, ladite imprégnation peut se réaliser par pulvérisation de ladite dispersion aqueuse dans un dispositif de pulvérisation comportant un pulvérisateur, avec ladite pulvérisation pouvant également être réalisée en continu et le taux de polymère pouvant être ajusté par le temps de séjour dans ce dispositif de pulvérisation, par le débit de pulvérisation dudit dispositif et par l'extrait sec de ladite dispersion. Un séchage au moyen d'un système de chauffage par exemple par rayonnement infra rouge peut permettre le séchage progressif par élimination de l'eau et au fur et à mesure le ramollissement ou la fusion dudit polymère pour lui permettre ainsi d'enrober lesdites fibres au coeur du faisceau des fibres dans lesdites mèches ou rubans ainsi imprégnés. Il est possible après cette étape d'avoir une mise en forme desdites mèches ou rubans ainsi traités sous forme de rubans unidirectionnels ou de tissus préimprégnés ou sous forme d'assemblages, en particulier des préformes. Dans l'étape de mise en forme, de préférence, elle est sous forme aplatie de rubans unidirectionnels ou de mèches de section cylindrique ou sous forme de tissus pré imprégnés ou sous forme d'assemblage de rubans, en particulier pour faire des préformes.

Une filière de calibration peut être utilisée pour calibrer les dimensions desdits rubans qui peuvent avoir des largeurs inférieures à 2000 mm, de préférence inférieure à 200 mm et en particulier entre 5 et 50 mm.

Finalement, on laisse refroidir les mèches ou rubans traités pour finir la consolidation des fibres avant embobinage éventuel.

Les exemples qui suivent sont présentés à titre d'illustration de l'invention et de ses performances et ne limitent en rien sa portée.

### 1 - EXEMPLES

Pour faire le traitement d'imprégnation par une solution aqueuse de copolyamide, on a fabriqué 10 I de plusieurs solutions (dispersions aqueuses de copolyamide) dans un réacteur de laboratoire.

Les copolyamides utilisés sont les produits commerciaux d'Arkema Platamid® 2592 et Platamid® 1657.

Leurs caractéristiques essentielles sont présentées au tableau I ci-dessous.

**Tableau I**

| Platamid® | Température de fusion | Fonctionnalité -COOH (µeq/g) |
|---|---|---|
| 2592 | 102 | 220 |
| 1657 | 107 | 180 |

Ces produits ont été introduits sous forme de poudre sèche, dans une solution d'eau avec de la soude (1% par rapport au Platamid®). L'extrait sec (ES) final est de 30%. Les réactifs sont chargés dans le réacteur, puis le milieu est inerté à l'azote. Les réactifs sont mis en chauffe dans le but d'atteindre la température de 150°C matière. Cette phase de chauffe est réalisée sous agitation à 1000 rpm. Entre 100 et 120°C, le milieu devient homogène, blanc et opaque. Le milieu est maintenu 30 min sous agitation à 1000 rpm à 150°C, puis refroidi sous une agitation à 300 rpm. Les dispersions obtenues sont fluides, blanches et opaques.

La granulométrie (taille des particules) des poudres a été mesurée au moyen d'observations réalisées par Microscopie Electronique à Balayage et également en utilisant la méthode de granulométrie par diffraction laser. Les 2 types de mesures sont concordants. Les données indiquées dans le tableau ci-dessous ont été obtenues avec la méthode de granulométrie par diffraction laser.

La taille de particules, la viscosité et l'extrait sec des dispersions utilisées sont présentés au tableau II ci-dessous.

**Tableau II**

| REF essai | Platamid® de la dispersion | Diamètre moyen en nombre des particules (nm) | Viscosité Brookfield* à 23°C (mPa.s) | Extrait sec dispersion (%) |
|---|---|---|---|---|
| EP-063 | Platamid® 2592 | 80 | 30 | 30 |
| EP-064 | Platamid® 1657 | 140 | 20 | 30 |

| | | | | |
|---|---|---|---|---|
| *la mesure a été faite avec un spindle (mobile) n° 1 a 60 rpm. | | | | |

Ces dispersions aqueuses ainsi préparées ont ensuite été utilisées sur la ligne de traitement des fibres de lin, sous forme non diluée ou diluée.

Sauf pour l'exemple 7 où la méthode d'imprégnation est spécifiée, dans tous les autres cas (à défaut de spécification particulière pour chaque exemple), ladite imprégnation a été réalisée par pulvérisation en ligne (en continu) à l'aide d'un dispositif pulvérisateur (spray) avec un temps de séjour sous le jet dudit pulvérisateur de 1 s environ. Le séchage est réalisé par chauffage avec un dispositif IR. Le refroidissement est réalisé à l'air libre.

La 1^{ère} série d'essais a été réalisée sur un roving (mèches de fibres) de lin de fort titrage ou grammage de 2190 tex, avec différents traitements :
Contre exemple 1 : mèche non imprégnée de 2190 tex.
Exemple 1 : EP-063 ND : imprégnation avec une solution non diluée (ES : 30%) de Platamid® 2592.
Exemple 2 : EP-063 D50 : imprégnation avec une dispersion diluée à 50% de Platamid® 2592 (ES : 15%).
Exemple 3 : EP-064 ND : imprégnation avec une dispersion non diluée de Platamid® 1657 (ES : 30%).
Exemple 4 : EP-064 D50 : imprégnation avec une dispersion diluée à 50% de Platamid® 1657 (ES : 15%).

La 2^{ème} série d'essais a été réalisée sur roving de lin de faible titrage (1030 tex) ayant subi un traitement avec le Platamid® 1657, à différents taux d'imprégnation.
Contre exemple 2 : mèche de faible titrage non imprégnée (0% de polymère).
Exemple 5 : imprégnation avec une solution diluée d'un facteur 4 avec ES : 7,5%.
Exemple 6 : imprégnation 2 fois de suite (2 passages) avec la dispersion de l'exemple 5.
Exemple 7 : imprégnation par immersion (trempage) dans la dispersion aqueuse avec un temps de séjour plus long (10 s).

### 2 - PROPRIETES MECANIQUES EN TRACTION

### 2.1 - Conditions de test

- Echantillons non conditionnés
- Température : 23°C

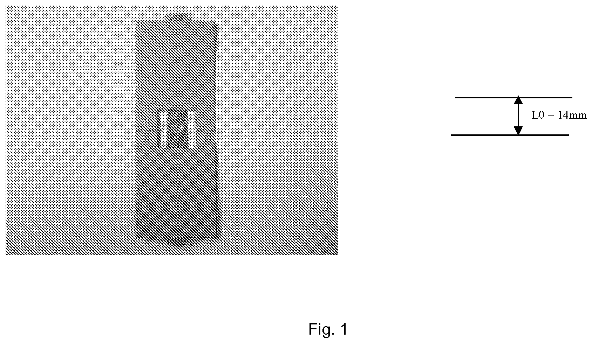

Le roving de lin est collé (avec colle Loctite® 401) sur un cadre en carton (selon Figure 1). La longueur de référence L0 a été choisie à 14 mm, sachant que la longueur moyenne d'une fibre de lin est d'environ 30 mm. Les bords supérieurs et inférieurs du carton sont serrés entre les mors du dynamomètre (machine Zwick) tandis que les bords latéraux sont coupés. Le roving est alors sollicité en traction à une vitesse de 1 mm/min (déplacement de la traverse).

### 2.2 - Résultats

Afin de comparer les rovings faiblement imprégnés de résine (jusqu'à 10% de polymère), on mesure la force à la rupture des différents échantillons testés. Les résultats sont présentés au tableau III ci-dessous.

**Tableau III**

| Référence | Contre exemple 1 | Exemple 1 | Exemple 2 | Exemple 3 | Exemple 4 |
|---|---|---|---|---|---|
| Type d'imprégnation | Non imprégné | EP63-ND | EP63-D50 | EP64-ND | EP64-D50 |
| Taux de résine (% poids) | 0 | 2-10% | 2-10% | 2-10% | 2-10% |
| Nb échantillons | 5 | 8 | 5 | 5 | 5 |
| Force moyenne à la rupture (N) | 443 | 775 | 723 | 888 | 770 |
| Ecart type | 33 | 98 | 68 | 23 | 73 |

On montre dans le tableau III que l'imprégnation par une dispersion de copolyamide permet d'augmenter très significativement la force à la rupture de la mèche de fibres de lin.

Les deux dispersions donnent des résultats similaires et dans le sens d'une consolidation (exemples 2 et 3 par opposition au contre exemple 1), ce qui démontre que la dispersion de consolidation proposée fonctionne, y compris pour des dilutions de 50% (ce qui correspond à un extrait sec de 15%).

Dans le tableau IV ci-dessous, on donne le résultat des différentes imprégnations avec le Platamid® 1657 et une mèche de faible grammage ou titrage (1030 tex). On constate qu'avec une dilution d'un facteur 4 avec extrait sec final de 7,5%, on obtient une force à rupture équivalente à celle obtenue avec le roving de fort titrage (2190 tex) non imprégné (comparaison de l'exemple 5 avec le contre exemple 1): on a ainsi démontré que l'utilisation d'une dispersion de copolyamide tel que défini ci-haut a permis d'utiliser une mèche de fibre de lin de titrage divisé par 2 par rapport à la mèche initiale (1030 tex contre 2190 tex), tout en conservant environ la même résistance mécanique (environ même force à la rupture).

On montre en outre, qu'en faisant plusieurs passages d'imprégnation (par pulvérisation) avec la même dispersion, on augmente le taux de copolyamide dans la mèche finale (comparaison entre exemples 5 et 6).

Pour finir, on montre par un essai d'imprégnation par immersion (trempage) avec un temps de pulvérisation beaucoup plus long (10 s), qu'il est possible d'imprégner la mèche avec près de 40% (en poids) de copolyamide (exemple 7). Ce taux correspond à un taux de résine (polymère) rencontré dans des renforts pré imprégnés usuels, permettant de faire ainsi directement des pièces composites par exemple par thermocompression, sans avoir à faire à une opération d'imprégnation supplémentaire du renfort fibreux.

On démontre ainsi la possibilité avec le procédé selon l'invention, de réaliser directement un semi-produit composite de type préimprégné prêt à l'emploi.

**Tableau IV**

| Référence | Contre exemple 2 | Exemple 5 | Exemple 6 | Exemple 7 |
|---|---|---|---|---|
| Type d'imprégnation | Non imprégné | Produit dilué d'un facteur 4 (ES : 7,5%) | Produit dilué d'un facteur 4 (ES : 7,5%) avec 2 passages | Imprégnation par immersion de 10 s |
| Taux de polymère (% poids / fibre + polymère) | 0 | 2,7 | 5,3 | 39,8 |
| Nb échantillons | 5 | 5 | 5 | 3 |
| Force moyenne à la rupture (N) | 202 | 449 | 549 | 948 |
| Ecart type | 15 | 49 | 65 | 49 |

## Revendications

1. Utilisation d'une dispersion aqueuse de polymère choisi parmi les copolyamides comprenant au moins un polymère amorphe présentant une Tg allant de 50°C à 175°C, de préférence de 80°C à 150°C ou semi-cristallin ayant une température de fusion allant de 70°C à moins de 220°C, de préférence supérieure à 90°C et jusqu'à 190°C, plus préférentiellement de 100°C à 170°C, comme liant d'imprégnation de mèches ou de rubans de fibres naturelles, en particulier de mèches ou de rubans de fibres de lin, **caractérisée en ce que** ledit polymère :
- est incorporé au coeur du faisceau de fibres constituant ladite mèche ou ledit ruban et liant ainsi lesdites fibres entre elles,
- est présent dans ladite dispersion à un taux en poids allant de 5 à 50% avec des particules en dispersion ayant une taille moyenne en nombre inférieure à 10000 nm, de préférence allant de 50 nm à 5000 nm et plus préférentiellement de 50 à 500 nm, et
ledit polymère est dispersible ou dispersé sous forme de poudre en milieu aqueux sans tensioactif et de préférence ledit polymère à l'état de poudre porte des groupements ioniques ou des groupements précurseurs de groupements ioniques, en particulier par neutralisation dans l'eau lors de la préparation de ladite dispersion,
ledit polymère est un copolyamide, de préférence porteur de groupements terminaux carboxy, sulfoniques ou des groupements terminaux aminés, plus préférentiellement ayant un taux desdits groupements allant de 50 à 500 µeq/g, en particulier de 100 à 250 µeq/g.

2. Utilisation selon la revendication 1, **caractérisée en ce que** ledit copolyamide porte des groupements aminés, de préférence amines primaires, neutralisés sous forme d'ammonium par un acide, de préférence acide de Bronsted, plus préférentiellement phosphoré.

3. Utilisation selon la revendication 1, **caractérisée en ce que** ledit copolyamide porte des groupements carboxy neutralisés, sous forme de sel, par une base.

4. Utilisation selon l'une des revendications 1 à 3, **caractérisée en ce que** ledit copolyamide est semi-cristallin et a une température de fusion inférieure ou égale à 150°C.

5. Utilisation selon l'une des revendications 1 à 4, **caractérisée en ce que** ledit copolyamide comprend au moins un des motifs suivants : 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 et leurs mélanges et de préférence comprend au moins un motif choisi parmi 11, 12, 10.10, 6, 6.10, 6.12, 10.12, 6.14 6.6/6, 11/10.10 et leurs mélanges.

6. Utilisation selon l'une des revendications 1 à 4, **caractérisée en ce que** ledit copolyamide est choisi parmi : PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.I, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 et leurs mélanges.

7. Utilisation selon l'une des revendications 1 à 4, **caractérisée en ce que** ledit copolyamide est amorphe semi-aromatique et choisi parmi :
- 6.I, 8.I, 9.I, 10.I, 11.I, 12.I, 6.I/9.I, 9.I/10.I, 9.I/11.I, 9.I/12.I, 9/6.I, 10/6.I, 11/6.I,12:6.I, 10/9.1I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10I/6I 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- polyamides terpolymères précédents avec 12/ remplacé par 9/, 10/, 6.10/, 6.12/, 10.6/, 10.10/, 10.12/, 9.10/ et 9.12/,
- tous les polyamides cités ci-haut, avec l'isophtalique (I) remplacé partiellement jusqu'à 40% mol par le téréphtalique (T), le naphtalène 2,6 dicarboxylique et/ou par le 1,3- ou le 1,4- CHDA (acide cyclohexane dicarboxylique), avec tout ou partie des diamines aliphatiques linéaires pouvant être remplacées par des diamines aliphatiques ramifiées, de préférence parmi triméthyl hexaméthylène diamine TMD, méthyl pentaméthylene diamine MPMD, méthyloctaméthylène diamine (MOMD) ou par des diamines cycloaliphatiques, de préférence parmi BMACM, BACM et/ou IPD ou des diamines arylaliphatiques, de préférence m- ou p-xylylène diamines,
- tous les polyamides cités ci-haut où l'isophtalique (I) est remplacé partiellement ou totalement par un diacide aliphatique linéaire ou ramifié en C₆ à C₁₈ et en même temps avec remplacement total ou partiel de la diamine aliphatique par une diamine cycloaliphatique parmi BMACM, BACM et/ou IPD.

8. Utilisation selon l'une des revendications 1 à 6, **caractérisée en ce que** ledit polymère est semi-cristallin avec une température de fusion Tf supérieure à 90°C, de préférence d'au moins 100°C et que les particules de ladite dispersion ont une taille moyenne en nombre allant de 50 à 5000 nm et de préférence de 50 à 500 nm.

9. Utilisation selon l'une des revendications 1 à 8, **caractérisée en ce que** le taux en poids sec dudit polymère par rapport au poids sec desdites fibres + polymère varie de 0,5% à moins de 50%.

10. Utilisation selon la revendication 9, **caractérisée en ce que** ledit taux en poids varie de 0,5 à 10% et que ladite imprégnation se limite à la consolidation desdites fibres entre elles en plus d'un ensimage.

11. Utilisation selon la revendication 9, **caractérisée en ce que** ledit taux est supérieur à 25% et inférieur à 50%, de préférence de 30% à 45% et que ladite imprégnation sert à consolider lesdites fibres et en plus à préparer un préimprégné desdites fibres utilisable dans la fabrication de matériaux composites.

12. Utilisation selon l'une des revendications 1 à 11, **caractérisée en ce que** la viscosité de ladite dispersion à 23°C varie de 10 à 1000 mPa.s.

13. Utilisation selon l'une des revendications 1 à 12, **caractérisée en ce que** ledit polymère est biosourcé et en particulier est un (co)polyamide à base de monomères biosourcés.

14. Utilisation selon l'une des revendications 1 à 13, **caractérisée en ce que** lesdites fibres sont des fibres longues, en particulier des fibres longues de lin avec L/D > 2000.

15. Utilisation selon l'une des revendications 1 à 14, **caractérisée en ce que** lesdites mèches ou rubans sont à base de fibres de lin ayant un tex allant de 10 à 10000 et de préférence de 100 à 4000 et encore plus préférentiellement de 500 à 1500.

16. Utilisation selon l'une des revendications 1 à 15, **caractérisée en ce que** lesdites mèches ou rubans de fibres ainsi traitées sont des fibres de renfort, en particulier de lin, de faible densité linéaire, pour la fabrication de composites à matrice polymère, en particulier à matrice thermoplastique, plus particulièrement pour matrice thermoplastique polyamide, encore plus particulièrement pour matrice polyamide à base de PA 11, PA10.10, PA 6.10 et PA 10.l/6.l.

17. Utilisation selon la revendication 16, **caractérisée en ce que** ledit polymère de ladite dispersion aqueuse de traitement est choisi en fonction de ladite matrice dudit matériau composite.

18. Utilisation selon la revendication 16 ou 17, **caractérisée en ce que** ledit polymère est identique audit polymère de matrice thermoplastique dudit matériau composite.

## Patentansprüche

1. Verwendung einer wässrigen Dispersion eines aus Copolyamiden ausgewählten Polymers, mit mindestens einem amorphen Polymer mit einer Tg von 50 °C bis 175 °C, vorzugsweise von 80 °C bis 150 °C, oder einem halbkristallinen Polymer mit einer Schmelztemperatur von 70 °C bis weniger als 220 °C, vorzugsweise von mehr als 90 °C bis 190 °C, noch mehr bevorzugt von 100 °C bis 170 °C, als Bindemittel zum Imprägnieren von Rovings oder Bändern aus Naturfasern, insbesondere von Rovings oder Bändern aus Flachsfasern, **dadurch gekennzeichnet, dass** das Polymer:
- in den Kern des Faserbündels eingearbeitet ist, aus dem das Roving oder Band besteht, und daher die Fasern aneinander bindet,
- in der Dispersion mit einem Gewichtsanteil von 5 bis 50 % vorhanden ist, wobei die Dispersionspartikel ein Zahlenmittel der Größe von weniger als 10 000 nm, vorzugsweise von 50 nm bis 5000 nm und noch mehr bevorzugt von 50 bis 500 nm, aufweisen, und
dass das Polymer in Pulverform in einem wässrigen Milieu ohne Tensid dispergierbar oder dispergiert ist und dass das Polymer im Pulverzustand vorzugsweise ionische Gruppen oder Vorläufergruppen von ionischen Gruppen trägt, insbesondere durch Neutralisation in Wasser bei der Herstellung der Dispersion,
wobei das Polymer ein Copolyamid ist, das vorzugsweise terminale Carboxy-, Sulfongruppen oder terminale Amingruppen trägt, noch mehr bevorzugt einen Gehalt der Gruppen von 50 bis 500 pÄq/g, insbesondere von 100 bis 250 pÄq/g, aufweist.

2. Verwendung nach Anspruch 1, **dadurch gekennzeichnet, dass** das Copolyamid Amin-, vorzugsweise primäre Amingruppen, trägt, die durch eine Säure, vorzugsweise eine Brönsted-, noch mehr bevorzugt eine phosphorhaltige Säure, in Form von Ammonium neutralisiert sind.

3. Verwendung nach Anspruch 1, **dadurch gekennzeichnet, dass** das Copolyamid durch eine Base neutralisierte Carboxygruppen in Form eines Salzes trägt.

4. Verwendung nach einem der Ansprüche 1 bis 3, **dadurch gekennzeichnet, dass** das Copolyamid halbkristallin ist und eine Schmelztemperatur von weniger als oder gleich 150 °C aufweist.

5. Verwendung nach einem der Ansprüche 1 bis 4, **dadurch gekennzeichnet, dass** das Copolymer mindestens eine der folgenden Einheiten umfasst: 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 und Mischungen davon, und vorzugsweise mindestens eine Einheit umfasst, die ausgewählt ist aus 11, 12, 10.10, 6, 6.10, 6.12, 10.12, 6.14 6.6/6, 11/10.10 und Mischungen davon.

6. Verwendung nach einem der Ansprüche 1 bis 4, **dadurch gekennzeichnet, dass** das Copolymer ausgewählt ist aus: PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.l, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 und Mischungen davon.

7. Verwendung nach einem der Ansprüche 1 bis 4, **dadurch gekennzeichnet, dass** das Copolymer amorph halbaromatisch ist und ausgewählt ist aus:
- 6.I, 8.I, 9.I, 10.I, 11.I, 12.I, 6.I/9.I, 9.I/10.I, 9.I/11.I, 9.I/12.I, 9/6.I, 10/6.I, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10I/6I 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10.I/12.I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- Vorläufer-Polyamidterpolymeren, bei denen 12/ durch 9/, 10/, 6.10/, 6.12/, 10.6/, 10.10/, 10.12/,9.10/ und 9.12/ ersetzt ist,
- allen vorstehend genannten Polyamiden, wobei Isophthal (I) teilweise bis 40 Mol-% durch Terephthal (T), 2,6-Naphthalindicarbon und/oder 1,3- oder 1,4-CHDA (Cyclohexandicarbonsäure) ersetzt ist, wobei alle oder ein Teil der aliphatischen linearen Diamine durch aliphatische verzweigte Diamine, vorzugsweise Trimethylhexamethylendiamin (TMD), Methylpentamethylendiamin (MPMD), Methyloctamethylendiamin (MOMD), oder cycloaliphatische Diamine, vorzugsweise BMACM, BACM und/oder IPD, oder arylaliphatische Diamine, vorzugsweise m- oder p-Xylylendiamine, ersetzt sein können,
- allen vorstehend genannten Polyamiden, wobei Isophthal (I) teilweise oder vollständig durch eine lineare oder verzweigte aliphatische zweiwertige C₆- bis C₁₈-Säure ersetzt ist, mit einem gleichzeitigen vollständigen oder partiellem Ersatz des aliphatischen Diamins durch ein cycloaliphatisches Diamin aus BMACM, BACM und/oder IPD.

8. Verwendung nach einem der Ansprüche 1 bis 6, **dadurch gekennzeichnet, dass** das Polymer halbkristallin mit einer Schmelztemperatur Tf von mehr als 90 °C, vorzugsweise mindestens 100 °C, ist und dass die Partikel der Dispersion ein Zahlenmittel der Größe von 50 bis 5000 nm und vorzugsweise von 50 bis 500 nm aufweisen.

9. Verwendung nach einem der Ansprüche 1 bis 8, **dadurch gekennzeichnet, dass** der Trockengewichtsanteil des Polymers, bezogen auf das Trockengewicht der Fasern + des Polymers, von 0,5 % bis weniger als 50 % variiert.

10. Verwendung nach Anspruch 9, **dadurch gekennzeichnet, dass** der Trockengewichtsanteil von 0,5 bis 10 % variiert und dass die Imprägnierung sich auf die Verfestigung der Fasern untereinander zusätzlich zu einer Schlichte beschränkt.

11. Verwendung nach Anspruch 9, **dadurch gekennzeichnet, dass** der Anteil mehr als 25 % und weniger als 50 %, vorzugsweise von 30 % bis 45 %, beträgt und dass die Imprägnierung dazu dient, die Fasern zu verfestigen und darüber hinaus ein Prepreg der Fasern herzustellen, das zur Herstellung von Verbundwerkstoffen brauchbar ist.

12. Verwendung nach einem der Ansprüche 1 bis 11, **dadurch gekennzeichnet, dass** die Viskosität der Dispersion bei 23 °C von 10 bis 1000 mPa.s variiert.

13. Verwendung nach einem der Ansprüche 1 bis 12, **dadurch gekennzeichnet, dass** das Polymer biobasiert ist und insbesondere ein (Co)Polyamid auf der Basis von biobasierten Monomeren ist.

14. Verwendung nach einem der Ansprüche 1 bis 13, **dadurch gekennzeichnet, dass** es sich bei den Fasern um Langfasern, insbesondere um lange Flachsfasern mit einem L/D > 2000 handelt.

15. Verwendung nach einem der Ansprüche 1 bis 14, **dadurch gekennzeichnet, dass** die Rovings oder Bänder auf Flachsfasern mit einer Feinheit von 10 bis 10 000 tex und vorzugsweise von 100 bis 4000 tex und noch mehr bevorzugt von 500 bis 1500 tex basieren.

16. Verwendung nach einem der Ansprüche 1 bis 15, **dadurch gekennzeichnet, dass** es sich bei den so behandelten Rovings oder Bändern um Verstärkungsfasern, insbesondere aus Flachs, mit einer geringen linearen Dichte zur Herstellung von Verbundwerkstoffen mit einer Polymermatrix, insbesondere mit einer thermoplastischen Matrix, noch mehr bevorzugt für eine thermoplastische Polyamidmatrix, noch spezieller für eine Polyamidmatrix auf der Basis von PA 11, PA10.10, PA 6.10 und PA 10.l/6.l, handelt.

17. Verwendung nach Anspruch 16, **dadurch gekennzeichnet, dass** das Polymer der wässrigen Behandlungsdispersion in Abhängigkeit von der Matrix des Verbundwerkstoffs ausgewählt ist.

18. Verwendung nach Anspruch 16 oder 17, **dadurch gekennzeichnet, dass** das Polymer mit dem Polymer der thermoplastischen Matrix des Verbundwerkstoffs identisch ist.

## Claims

1. Use of an aqueous polymer dispersion selected from copolyamides comprising at least one amorphous polymer with a Tg ranging from 50°C to 175°C, preferably from 80°C to 150°C or semi-crystalline having a melting point ranging from 70°C to less than 220°C, preferably more than 90°C and up to 190°C, more preferably from 100°C to 170°C, as impregnation binder rovings or natural fiber ribbons, particularly rovings or ribbons of flax fibers, **characterized in that** the said polymer:
- is incorporated into the core of the fiber bundle making up said roving or said ribbon and thus binding said fibers to one another,
- is present in said dispersion in a weight content ranging from 5% to 50% with particles in dispersion having a number-average size of less than 10 000 nm, preferably ranging from 50 nm to 5000 nm and more preferentially from 50 to 500 nm, and
the said polymer is dispersible or dispersed in powder form in an aqueous medium without surfactant, and preferably, said polymer in powder form bears ionic groups or groups that are precursors of ionic groups, in particular by neutralization in water during the preparation of said dispersion,
the said polymer is a copolyamide, preferably bearing sulfonic carboxy end groups or amine end groups, more preferentially having a content of said groups ranging from 50 to 500 peq/g (microequivalents/g), in particular from 100 to 250 peq/g.

2. Use according to claim 1, **characterized in that** said copolyamide bears amine groups, preferably primary amine groups, neutralized in ammonium form by an acid, preferably a Bronsted acid, which is more preferentially phosphorus-comprising.

3. Use according to claim 1, **characterized in that** said copolyamide bears carboxy groups which are neutralized in salt form by a base.

4. Use according to one of claims 1 to 3, **characterized in that** said copolyamide is semi-crystalline and has a melting point of less than or equal to 150°C.

5. Use according to one of claims 1 to 4, **characterized in that** said copolyamide comprises at least one of the following units: 5.9, 5.10, 5.12, 5.13, 5.14, 5.16, 5.18, 5.36, 6, 6.9, 6.10, 6.12, 6.13, 6.14, 6.16, 6.18, 6.36, 9, 10.6, 10.9, 10.10, 10.12, 10.13, 10.14, 10.16, 10.18, 10.36, 11, 12, 12.6, 12.9, 12.10, 12.12, 12.13, 12.14, 12.16, 12.18, 12.36, 6.6/6, 11/10.10 and mixtures thereof, and preferably comprises at least one unit chosen from 11, 12, 10.10, 6, 6.10, 6.12, 10.12, 6.14 6.6/6, 11/10.10 and mixtures thereof.

6. Use according to one of claims 1 to 4, **characterized in that** said copolyamide is selected from: PA 6/6.6/12, PA 6/6.6/11/12, PA 6/12, PA 6.9/12, PA Pip.9/Pip.12/11, PA 6/IPD.6/12, PA IPD.9/12, PA6/MPMD.12/12, PA 6/6.12/12, PA 6/6.10/12, PA 6/Pip.12/12, PA 6/6.6/6.10/6.l, PA 6.10/Pip.10/Pip.12, PA 6/11/12, PA Pip.12/12, PA IPD.10/12, PA Pip.10/12, PA 6/11, PA Pip.10/11/Pip.9, PA 6/6.6/6.10, PA 6/6.10/6.12 and mixtures thereof.

7. Use according to one of claims 1 to 4, **characterized in that** said copolyamide is semi-aromatic amorphous and selected from:
- 6.I, 8.I, 9.I, 10.I, 11.I, 12.I, 6.I/9.I, 9.I/10.I, 9.I/11.I, 9.I/12.I, 9/6.I, 10/6.I, 11/6.I,12:6.I, 10/9.I, 10/10.I, 10/11.I, 10/12.I, 11/9.I, 11/10.I, 11/11.I, 11/12.I, 12/9.I, 12/10.I, 12/11.I, 12/12.I, 6.10/6.I, 6.12/6.I, 9.10/6.I, 9.12/6.I, 10.10/6.I, 10.12/6.I, 6.10/9.I, 6.12/9.I, 10I/6I 10.10/9.I, 10.12/9.I, 6.10/10.I, 6.12/10.I, 9.10/10.I, 9.12/10.I, 10.10/10.I, 10.12/10.I, 6.10/12.I, 6.12/12.I, 9.10/12.I, 9.12/12.I, 10.10/12.I, 11/6.I/9.I, 11/6.I/10.I, 11/6.I/11.I, 11/6.I/12.I, 11/9.I/10.I, 11/9.I/11.I, 11/9.I/12.I, 11/10.I/11.I, 11/10. I/12. I, 11/11.I/12.I, 6.I/10.I, 6.I/11.I, 6.I/12.I, 10.I/11.I, 10.I/12.I, 11.I/12.I, 12/6.I/10.I, 12/6.I/11.I, 12/6.I/12.I, 12/9.I/10.I, 12/9.I/11.I, 12.9.I/12.I, 12/10.I/11.I, 12/10.I12.I, 12/11.I/12.I, 12/11.I/12.I,
- the preceding terpolymer polyamides with 12/ replaced with 9/, 10/, 6.10/, 6.12/, 10.6/, 10.10/, 10.12/, 9.10/ and 9.12/,
- all the polyamides mentioned above, with isophthalic (I) partially replaced up to 40 mol% with terephthalic (T), 2.6 naphthalenedicarboxylic acid and/or with 1,3- or 1,4-CHDA (cyclohexanedicarboxylic acid), with all or some of the linear aliphatic diamines possibly being replaced with branched aliphatic diamines, preferably among trimethylhexamethylenediamine TMD, methylpentamethylenediamine MPMD, methyloctamethylenediamine (MOMD) or with cycloaliphatic diamines, preferably among BMACM, BACM and/or IPD or arylaliphatic diamines, preferably m- or p-xylylenediamines,
- all the polyamides mentioned above where isophthalic (I) is partially or totally replaced with a linear or branched C₆ to C₁₈ aliphatic diacid and at the same time with total or partial replacement of the aliphatic diamine with a cycloaliphatic diamine among BMACM, BACM and/or IPD.

8. Use according to one of claims 1 to 6, **characterized in that** said polymer is semi-crystalline with a melting point Mp greater than 90°C, preferably of at least 100 °C, and that the particles of said dispersion have a number-average size ranging from 50 to 5000 nm and preferably from 50 to 500 nm.

9. Use according to one of claims 1 to 8, **characterized in that** the dry weight content of said polymer relative to the dry weight of said fibers + polymer ranges from 0.5% to less than 50%.

10. Use according to claim 9, **characterized in that** said weight content ranges from 0.5% to 10% and that said impregnation is limited to the consolidation of said fibers to one another in addition to sizing.

11. Use according to claim 9, **characterized in that** said content is greater than 25% and less than 50%, preferably from 30% to 45% and that said impregnation serves to consolidate said fibers and in addition to prepare a prepreg of said fibers that can be used in the manufacture of composite materials.

12. Use according to one of claims 1 to 11, **characterized in that** the viscosity of said dispersion at 23°C ranges from 10 to 1000 mPa.s.

13. Use according to one of claims 1 to 12, **characterized in that** said polymer is biobased and in particular is a (co)polyamide based on biobased monomers.

14. Use according to one of claims 1 to 13, **characterized in that** said fibers are long fibers, especially long flax fibers with L/D > 2000.

15. Use according to one of claims 1 to 14, **characterized in that** said rovings or ribbons are based on flax fibers having a tex ranging from 10 to 10 000 and preferably from 100 to 4000 and even more preferentially from 500 to 1500.

16. Use according to claims 1 to 15, **characterized in that** said rovings or ribbons of fibers thus treated are reinforcing fibers, in particular reinforcing flax fibers, of low linear density, for the manufacture of polymer matrix composites, in particular thermoplastic matrix composites, more particularly for a polyamide thermoplastic matrix, even more particularly for a polyamide matrix based on PA 11, PA10.10, PA 6.10 and PA 10.l/6.l.

17. Use according to claim 16, **characterized in that** said polymer of said aqueous treatment dispersion is selected according to said matrix of said composite material.

18. Use according to claim 16 or 17, **characterized in that** said polymer is identical to said thermoplastic matrix polymer of said composite material.
